# EUROPÄISCHE PATENTSCHRIFT

(11) **EP 3 768 533 B1**
(45) Veröffentlichungstag und Bekanntmachung des Hinweises auf die Patenterteilung: **21.07.2021**
(21) Anmeldenummer: 20701445.7
(22) Anmeldetag: 21.01.2020
(51) Int. Cl.: B60G 11/27, F16F 9/05

(54) **LUFTFEDERSYSTEM**
AIR SPRING SYSTEM
SYSTÈME DE RESSORT PNEUMATIQUE

(30) Priorität: 31.01.2019 DE 102019102418
(43) Veröffentlichungstag der Anmeldung: 27.01.2021
(73) Patentinhaber: SAF-HOLLAND GmbH, 63856 Bessenbach (DE)
(72) Erfinder: BRUNSCH, Bernd, 63303 Dreieich (DE); DIENER, Konstantin, 63739 Aschaffenburg (DE); BÖNIG, Matthias, 63579 Freigericht-Horbach (DE)
(74) Vertreter: Müller Schupfner & Partner Patent- und Rechtsanwaltspartnerschaft mbB
(86) Internationale Anmeldenummer: PCT/EP2020/051348
(87) Internationale Veröffentlichungsnummer: WO 2020/156873

(56) Entgegenhaltungen:
- EP-A1- 2 846 061
- DE-A1- 19 505 026
- US-A- 3 876 193

## Beschreibung

Die Erfindung betrifft ein Luftfedersystem, insbesondere für Nutzfahrzeuge.

Luftfedersysteme sind bereits aus dem Stand der Technik bekannt, diese dienen dazu, ein Rad, eine Achse oder eine Welle gegenüber einem Fahrzeugrahmen federn zu lagern. Hierzu wird ein inneres Luftfedervolumen mit Luft befüllt, wobei bei einer Relativbewegung des Fahrzeugrahmens zu dem Rad, der Achse oder der Welle dieses Volumen komprimiert werden kann, sodass eine abfedernde Wirkung durch die in dem Volumen enthaltene Luft erzielt wird. Ein solches Luftfedersystem ist beispielsweise in der DE 10 2013 110 645 A1 gezeigt, wobei bei diesem System durch das Abrollen des Luftfederbalgs auf dem Tauchkolben ein Ventil geschaltet wird, um eine Regulierung der Federhöhe zu erreichen. Problematisch bei diesen aus dem Stand der Technik bekannten Luftfedersystemen ist jedoch, dass, sollte bei der Befüllung des Inneren des Luftfedersystems ein zu hoher Druck, insbesondere der volle Kesseldruck, eingesetzt werden, das Luftfedersystem, insbesondere der Luftfederbalg, beschädigt werden kann.

Die EP 2 846 061 A1, die den Oberbegriff des Anspruchs 1 offenbart, betrifft eine Luftfeder für ein Fahrzeug mit einem Luftbalg mit einem mit Druckluft befüllbaren Balginnenraum und einem Tauchkolben, welcher mit dem Luftbalg gekoppelt ist und einen Mantelkörper aufweist, welcher eine Abrollfläche für den Luftbalg bildet. Der Tauchkolben ist als Hohlkörper ausgeführt und weist einen Kolbeninnenraum auf. Es ist ein Ventil zum Belüften des Balkinnenraums vorgesehen, durch welches der Balginnenraum mit dem Kolbeninnenraum fluidisch verbindbar ist.

Die US 3,876,193 betrifft eine Ventilanordnung zum Kontrollieren eines Ausrichtungssystems eines Fahrzeugs für eine Luftfederanordnung.

Die DE 195 05 026 A1 betrifft eine selbstpumpende Luftfeder für ein Kraftfahrzeug.

Es ist daher Aufgabe der Erfindung, ein Luftfedersystem bereitzustellen, welches ein besonders hohes Maß an Sicherheit gegen Beschädigungen bietet und darüber hinaus auch noch kompakt ist.

Diese Aufgabe wird mit einem Luftfedersystem gemäß Anspruch 1 gelöst. Weitere vorteilhafte Merkmale und Ausführungsformen ergeben sich aus den Unteransprüchen, der Beschreibung und den Figuren.

Erfindungsgemäß umfasst das Luftfedersystem, insbesondere für Nutzfahrzeuge, einen Luftfederbalg und einen Luftfederkolben, wobei der Luftfederbalg mittelbar und/oder unmittelbar mit einem ersten Fahrwerksteil, insbesondere einem Fahrzeugrahmen, verbunden ist oder dazu ausgelegt ist, verbunden zu sein, wobei der Luftfederkolben mittelbar und/oder unmittelbar mit einem zweiten Fahrwerksteil, insbesondere einem Lenker bzw. Längslenker, verbunden ist oder dazu ausgelegt ist, verbunden zu sein, wobei der Luftfederbalg und der Luftfederkolben mittelbar und/oder unmittelbar miteinander verbunden sind oder dazu ausgelegt sind, verbunden zu sein, wobei der Luftfederbalg und der Luftfederkolben zumindest teilweise ein inneres Luftvolumen umschließen, wobei der Luftfederkolben eine Abrollfläche für das Abrollen des Luftfederbalgs aufweist, wobei der Luftfederbalg einen Kontaktabschnitt für das Abrollen auf der Abrollfläche aufweist, wobei die Abrollfläche und/oder der Kontaktabschnitt zumindest einen Durchbruch aufweisen, wobei kontaktierende Bereiche der Abrollfläche und des Kontaktabschnitts eine gemeinsame Kontaktfläche definieren, wobei durch eine Veränderung der Kontaktfläche, insbesondere durch eine Relativbewegung des Luftfederbalgs zum Luftfederkolben, eine fluidische Verbindung für einen Luftstrom durch den zumindest einen Durchbruch zwischen, insbesondere vom, dem inneren Luftvolumen und, insbesondere in, einer Umgebung ermöglicht oder verhindert ist. Das erfindungsgemäße Luftfedersystem dient insbesondere dazu, eine Relativbewegung zwischen einem ersten Fahrwerksteil und einem zweiten Fahrwerksteil abzufedern und/oder zu dämpfen. Bevorzugt handelt es sich bei dem Luftfedersystem um ein Nutzfahrzeugluftfedersystem. Ein Nutzfahrzeug im Sinne der Erfindung ist insbesondere ein straßengebundenes Fahrzeug, welches vorteilhafterweise ein maximal zulässiges Gesamtgewicht von mindestens 3,51 t, bevorzugt von mindestens 7,51 t und besonders bevorzugt von mindestens 15 t aufweist. Das erfindungsgemäße Luftfedersystem umfasst dabei einen Luftfederbalg und einen Luftfederkolben. Der Luftfederbalg ist bevorzugt an einem ersten Fahrwerksteil angeordnet, wobei das erste Fahrwerksteil vorteilhafterweise ein Fahrzeugrahmen ist. Der Luftfederbalg ist bevorzugt zum überwiegenden Teil aus einem elastischen Material, wie beispielsweise Gummi, ausgebildet. Der Luftfederkolben des erfindungsgemäßen Luftfedersystems ist insbesondere mittel- und/oder unmittelbar mit einem zweiten Fahrwerksteil verbunden, wobei das zweite Fahrzeugteil vorzugsweise ein Lenker ist. Alternativ oder zusätzlich bevorzugt können das erste Fahrwerksteil und/oder das zweite Fahrwerksteil auch beispielsweise durch einen Teil eines Radlagergehäuses, einen Teil einer Achse oder Welle gebildet sein. Der Luftfederbalg und der Luftfederkolben sind insbesondere mittelbar und/oder unmittelbar miteinander verbunden, bevorzugt durch ein Verklemmen eines Endes des Luftfederbalgs mit dem Tauchkolben. Dies kann beispielsweise durch die Verwendung einer Klemmplatte erreicht werden, wobei zwischen der Klemmplatte und dem Tauchkolben ein Ende des Luftfederbalgs eingeklemmt wird/ist, so dass der Luftfederkolben und der Luftfederbalg miteinander kraftschlüssig verbunden sind. Der Luftfederbalg und der Tauchkolben des Luftfedersystems umschließen zumindest teilweise ein inneres Luftvolumen. Dieses innere Luftvolumen des Luftfedersystems umfasst zumindest das Arbeitsvolumen des Luftfedersystems, welches dazu dient, bei einem Ein- und Ausfedern des ersten Fahrwerksteil relativ zum zweiten Fahrwerksteil komprimiert bzw. dekomprimiert zu werden, um so eine Abfederung des ersten Fahrwerksteils relativ zum zweiten Fahrwerksteil zu erreichen. In anderen Worten kann dies bedeuten, dass das Arbeitsvolumen des Luftfedersystems zumindest einen Teil des inneren Luftvolumens bildet. Vorteilhafterweise ist dieses innere Luftvolumen derart umschlossen bzw. von andern Volumina, insbesondere der Umgebung, fluidisch separiert, so dass ein Luftstrom aus diesem inneren Luftvolumen lediglich durch den Durchbruch und durch Anschlusselemente zum Be- und/oder zum Entleeren des inneren Luftvolumens möglich ist. Der Durchbruch erstreckt sich vorteilhafterweise derart, dass durch diesen unmittelbar eine fluidische Verbindung für einen Luftstrom zwischen dem inneren Luftvolumen und der Umgebung ermöglicht bzw. ermöglichbar ist. In anderen Worten kann dies bedeuten, dass der Durchbruch direkt, insbesondere ohne weitere Leitungselement, das Luftvolumen mit der Umgebung verbinden kann. Der Luftfederkolben, welcher vorteilhafterweise als ein Tauchkolben ausgebildet ist, weist, insbesondere in seinem Mantelbereich, eine Abrollfläche auf, welche dazu dient, dass auf dieser Abrollfläche ein Kontaktabschnitt des Luftfederbalgs bei der Einfederbewegung des Luftfedersystems abrollen kann. In anderen Worten bedeutet dies, dass die Abrollfläche des Luftfederkolbens dazu dient, dass auf dieser während des Einfederns des ersten Fahrwerksteils zum zweiten Fahrwerksteil der Kontaktabschnitt des Luftfederbalgs abrollen kann. Die Abrollfläche muss dabei nicht unbedingt als eine zusammenhängende Fläche ausgebildet sein, vielmehr kann die Abrollfläche des Luftfederkolbens durch sämtliche Flächen gebildet sein, welche dazu ausgelegt sind, dass an diesen der Kontaktabschnitt des Luftfederbalgs abrollen kann. Der Kontaktabschnitt des Luftfederbalgs ist insbesondere derjenige Bereich des Luftfederbalgs, welcher dazu dient, auf der Abrollfläche des Luftfederkolbens abrollen zu können. In anderen Worten kann der Kontaktabschnitt daher durch diejenigen Teile des Luftfederbalgs gebildet sein, welche in einem eingebauten Zustand in der Lage sind, mit der Abrollfläche kontaktieren zu können. Vorteilhafterweise ist der Kontaktabschnitt des Luftfederbalgs durch den Bereich des Luftfederbalgs in der Nähe desjenigen Endabschnitts des Luftfederbalgs ausgebildet, welcher mittelbar und/oder unmittelbar mit dem Luftfederkolben verbunden ist. Die kontaktierenden Bereiche der Abrollfläche und des Kontaktabschnitts definieren eine Kontaktfläche. In anderen Worten kann dies bedeuten, dass diejenigen Bereiche der Abrollfläche und des Kontaktabschnitts, welche, insbesondere unmittelbar, miteinander kontaktieren, die Kontaktflächen ausbilden bzw. definieren. In der Abrollfläche oder dem Kontaktabschnitt weist das erfindungsgemäße Luftfedersystem einen, insbesondere kreisrunden, Durchbruch auf. Dieser Durchbruch erstreckt sich vorteilhafterweise derart, dass ein Ende des Durchbruchs innerhalb des inneren Luftvolumens endet/mündet und das andere Ende des Durchbruchs in der Umgebung. In anderen Worten verbindet der Durchbruch das innere Luftvolumen, insbesondere unmittelbar, mit der Umgebung. Das erfindungsgemäße Luftfedersystem ist derart gestaltet, dass durch eine Veränderung der Kontaktfläche, insbesondere durch eine Relativbewegung des Luftfederbalgs zum Luftfederkolben, ein Luftstrom durch den zumindest einen Durchbruch vom inneren Luftvolumen in die Umgebung ermöglicht oder verhindert ist. In anderen Worten kann dies bedeuten, dass durch eine Relativbewegung des Luftfederbalgs zum Luftfederkolben oder durch eine Relativbewegung des ersten Fahrwerksteils zum zweiten Fahrwerksteil eine Veränderung der Kontaktfläche, insbesondere eine Vergrößerung der Kontaktfläche, dazu führt, dass ein Luftstrom durch den zumindest einen Durchbruch verhindert ist, beispielsweise durch ein Verdecken des Durchbruchs durch den Kontaktabschnitt. Bei einer Ausfederbewegung des Luftfedersystems jedoch wird ab einer gewissen Ausfederung ein Durchströmen des Durchbruchs möglich, so dass ein Luftstrom vom inneren Luftvolumen in die Umgebung fließen kann, beispielsweise durch ein Freigeben des Durchbruchs durch den Kontaktabschnitt. Unter einem Verhindern eines Luftstroms kann im Sinne der Erfindung verstanden werden, dass der maximale Volumenstrom bei dem "verhinderten" Zustand 20%, bevorzugt 10%, besonders bevorzugt 5% und besonders stark bevorzugt 1% des maximalen Luftstroms in dem "ermöglichten" Zustand entsprechen soll. In anderen Worten kann dies bedeuten, dass auch in einer verhinderten Stellung eine gewisse Luftleckage durch den Durchbruch möglich sein kann, vorteilhafterweise ist in der "verhinderten" Stellung jedoch ein Luftstrom durch den Durchbruch vollständig verhindert. Durch die erfindungsgemäße Ausgestaltung des Luftfedersystems wird ermöglicht, dass das Luftfedersystem ein besonders hohes Maß an Sicherheit aufweist, denn sollte die Befüllung des Luftfedersystems mit einem zu hohen Druck erfolgen, wird automatisch ein entweichender Luftstrom in die Umgebung - durch den Durchbruch - erreicht. Hierdurch wird eine Überbelastung des Luftfedersystems verhindert.

Vorteilhafterweise ist in und/oder um den Durchbruch ein Dichtelement, insbesondere ein O-Ring, angeordnet. Hierdurch kann eine Beschädigung des Luftfederbalgs verhindert oder zumindest reduziert werden. Alternativ oder zusätzlich bevorzugt kann hierdurch auch eine besonders hohe Dichtwirkung erreicht werden. Das Dichtelement ist insbesondere derart gestaltet, dass dieses den Durchbruch umgibt und/oder umfänglich innerhalb des Durchbruchs angeordnet ist. Vorteilhafterweise ist das Dichtelement derart angeordnet, dass dieses auf der der Umgebung zugewandten Seite des Durchbruchs angeordnet ist und/oder über den Durchbruch hinausragt. In anderen Worten kann das Dichtelement daher derart angeordnet sein, dass in dem Zustand des Luftfedersystems, in welchem ein Luftstrom durch den Durchbruch verhindert ist, das Dichtelement komprimiert ist. Vorteilhafterweise kontaktiert das Dichtelement dabei in dem verhinderten Zustand die Abrollfläche und/oder den Kontaktabschnitt unmittelbar. Hierdurch kann ein besonders hohes Maß an Dichtigkeit erreicht werden.

Erfindungsgemäß weist der Durchbruch ein erstes Ende und ein zweites Ende auf, wobei das erste Ende des Durchbruchs in dem inneren Luftvolumen mündet, und wobei das zweite Ende des Durchbruchs in der Abrollfläche oder in dem Kontaktabschnitt angeordnet ist und/oder mündet. Durch dieses Ausgestalten des Durchbruchs kann eine besonders kurze fluidische Verbindung zwischen dem inneren Luftvolumen und der Umgebung erreicht werden, so dass ein besonders geringer Widerstand, welcher durch den Durchbruch induziert ist, gegen den Luftstrom erreicht werden kann. In anderen Worten kann dies bedeuten, dass der Durchbruch als eine direkte Verbindung zwischen dem inneren Luftvolumen des Luftfedersystems und der Umgebung ausgestaltet ist.

In einer vorteilhaften Ausführungsform beträgt eine Fluidstrecke zwischen dem ersten Ende und der Umgebung maximal 2 cm, bevorzugt maximal 1,5 cm und besonders bevorzugt maximal 0,9 cm. Die Fluidstrecke ist insbesondere die Strecke, welche ein Luftstrom vom ersten Ende bis zum Eintritt in die Umgebung, insbesondere am zweiten Ende, zurücklegen muss. Maßgeblich für die Bestimmung der Länge der Fluidstrecke ist insbesondere die maximale oder die gemittelte Länge des Luftstroms von dem ersten Ende des Durchbruchs bis zur Umgebung. Bei einer Länge der Fluidstrecke von 2 cm kann eine besonders leichte Ausgestaltung des Luftfedersystems erreicht werden, denn hierdurch muss eine besonders dünnwandige Ausgestaltung des Luftfederkolbens oder des Luftfederbalgs erfolgen. Um eine besonders gute Fluidleitung durch den Durchbruch zu ermöglichen, sollte die Fluidstrecke maximal 1,5 cm betragen. Bei einer Fluidstrecke von maximal 0,9 cm kann ein besonders einfach herzustellender Durchbruch erreicht werden.

Vorteilhafterweise liegt ein Verhältnis von der Länge des Durchbruchs zu der Querschnittsfläche des Durchbruchs in einem Bereich von 0,1 bis 0,6, bevorzugt in einem Bereich von 0,2 bis 0,5 und besonders bevorzugt in einem Bereich von 0,27 bis 0,4. Die Länge des Durchbruchs ist insbesondere der kürzeste Abstand zwischen dem ersten Ende des Durchbruchs und dem zweiten Ende des Durchbruchs. Alternativ oder zusätzlich bevorzugt kann die maßgebliche Länge des Durchbruchs auch durch die Fluidstrecke des Durchbruchs gebildet sein. Die für die Bestimmung des Verhältnisses maßgebliche Querschnittsfläche des Durchbruchs ist insbesondere die kleinste Querschnittsfläche des Durchbruchs. Die Querschnittsfläche des Durchbruchs bestimmt sich vorteilhafterweise senkrecht zu der mittleren Durchströmungsrichtung des Luftstroms durch den Durchbruch. Bei einem Verhältnis der Länge des Durchbruchs zu der Querschnittsfläche des Durchbruchs im Bereich von 0,1 bis 0,6 resultiert ein besonders geringer Strömungswiderstand. Bei einem Verhältnis im Bereich von 0,2 bis 0,5 ergibt sich ein besonders leicht herzustellender Durchbruch. Um ein besonders kompaktes Luftfedersystem, insbesondere einen besonders kompakten Luftfederkolben, zu erreichen, sollte das Verhältnis der Länge des Durchbruchs zu der Querschnittsfläche des Durchbruchs in einem Bereich von 0,27 bis 0,4 liegen.

Zweckmäßigerweise erstreckt sich der Durchbruch geradlinig. Durch dieses geradlinige Erstrecken des Durchbruchs kann ein besonders geringer Strömungswiderstand entgegen einer Luftströmung durch den Durchbruch erreicht werden. Unter geradlinig kann in diesem Zusammenhang verstanden werden, dass der Durchbruch keinen gekrümmten Verlauf entlang der Strömungsrichtung des Luftstroms durch den Durchbruch aufweist. Alternativ oder zusätzlich bevorzugt ist der Querschnitt des Durchbruchs konstant über dessen Länge. Hierdurch kann eine besonders einfache Fertigung des Durchbruchs erreicht werden, so dass ein kostengünstiges Luftfedersystem resultiert. Es sei jedoch angemerkt, dass insbesondere in den Randbereichen des Luftfedersystems kleinere Fasen, dessen Länge jedoch insbesondere nicht mehr als 10% bevorzugt nicht mehr als 5% der Länge des Durchbruchs betragen sollen, vorgesehen sein können, welche nicht für die Bestimmung des maßgeblichen Querschnitts herangezogen werden sollen. Mit anderen Worten kann dies bedeuten, dass auch dann ein konstanter Querschnitt des Durchbruchs vorliegen kann, wenn die Enden des Durchbruchs angefast sind oder Nuten für die Aufnahme eines Dichtelements aufweisen.

Erfindungsgemäß umfasst das Luftfedersystem eine Ventilanordnung, wobei die Ventilanordnung einen Luftstrom durch den Durchbruch vom inneren Luftvolumen in die Umgebung ermöglicht oder verhindert. Durch das Vorsehen einer Ventilanordnung kann eine besonders sichere Verhinderung des Luftstroms durch den Durchbruch ermöglicht werden. Besonders bevorzugt ist es, wenn das Schalten der Ventilanordnung unmittelbar durch die Relativbewegung des Luftfederbalgs zum Luftfederkolben erfolgt, insbesondere ohne den Einsatz von Stellmotoren oder sonstigen aktiven Stellmitteln. In anderen Worten kann dies bedeuten, dass lediglich durch die Relativbewegung des ersten Fahrwerkteils zum zweiten Fahrwerksteil bzw. vom Luftfederbalg zum Luftfederkolben die Ventilanordnung einen Luftstrom vom inneren Luftvolumen in die Umgebung ermöglicht oder verhindert. Daher kann insbesondere die Relativbewegung ausschließlich für die Veränderung des Schaltzustandes der Ventilanordnung ursächlich sein. Unter "aktive Stellmittel" können Mittel, insbesondere Motoren oder Spulen, verstanden werden, welche durch eine externe Energiequelle, insbesondere durch Batterien, gespeist sind. Vorteilhafterweise ist die Ventilanordnung dabei derart ausgestaltet und/oder angeordnet, dass diese sich teilweise in den Durchbruch erstreckt. Hierdurch kann eine besonders kompakte Ventilanordnung erreicht werden. Vorteilhafterweise ist die Ventilanordnung zumindest teilweise mittel- und/oder unmittelbar an der Abrollfläche oder dem Kontaktabschnitt angeordnet. Hierdurch kann eine besonders bauraumsparende Ventilanordnung zum Ermöglichen oder Verhindern des Luftstroms durch den Durchbruch erreicht werden.

In einer bevorzugten Ausführungsform umfasst die Ventilanordnung einen Schließkörper, wobei der Schließkörper durch eine translatorische oder durch eine rotatorische Bewegung, insbesondere relativ zur Abrollfläche oder zum Kontaktabschnitt, einen Luftstrom durch den Durchbruch vom inneren Luftvolumen in die Umgebung ermöglicht oder verhindert. Hierdurch kann eine besonders einfache Ausgestaltung der Ventilanordnung auf kostengünstige Weise erfolgen. Der Schließkörper der Ventilanordnung ist insbesondere derjenige Teil der Ventilanordnung, welcher einen Luftstrom verhindert und/oder zulässt. In anderen Worten kann der Schließkörper daher derjenige Teil der Ventilanordnung sein, welcher ursächlich für die Verhinderung oder das Zulassen des Volumenstroms ist. Besonders bevorzugt ist der Schließkörper derart ausgebildet, dass dieser in der geschlossenen Stellung den Durchbruch, insbesondere an dessen zweitem Ende, vollständig überdeckt. Hierdurch kann in besonders einfacher Weise ein Schließkörper erreicht werden, welcher einen Luftstrom durch den Durchbruch verhindert. Vorteilhafterweise umschließt die Projektion des Schließkörpers in Richtung der Erstreckung des Durchbruchs und/oder in Richtung des Luftstroms durch den Durchbruch und/oder in Richtung der Fluidstrecke die Projektion des Durchbruchs in diese Richtung. In anderen Worten kann der Schließkörper, in Strömungsrichtung betrachet, größer sein als der Querschnitt des Durchbruchs an dessen ersten und/oder an dessen zweiten Ende.

In einer bevorzugten Ausführungsform ist der Schließkörper, wenn ein Luftstrom durch den Durchbruch vom inneren Luftvolumen in die Umgebung verhindert ist, zumindest teilweise zwischen der Abrollfläche und dem Kontaktabschnitt angeordnet. Hierdurch kann eine besonders kompakte Ventilanordnung erreicht werden. Insbesondere kontaktiert der Schließkörper dabei, wenn ein Luftstrom verhindert ist, die Abrollfläche, den Kontaktabschnitt und/oder das Dichtelement unmittelbar, um auf eine besonders einfache und kompakte Weise eine Verhinderung des Luftstroms durch den Durchbruch zu erreichen.

In einer vorteilhaften Ausführungsform ist der Schließkörper aus Kunststoff gebildet. Hierdurch kann eine starke Reduktion bzw. Verhinderung von Korrosion erreicht werden. Alternativ oder zusätzlich bevorzugt kann der Schließkörper auch aus einem metallischen Werkstoff, insbesondere Aluminium oder Stahl, gebildet sein, um eine besonders mechanisch belastbare Ventilanordnung erreicht werden.

In einer besonders bevorzugten Ausführungsform weist der Schließkörper ein Filmgelenk auf und/oder ist über ein Filmgelenk mit dem Tauchkolben, insbesondere mit der Abrollfläche, verbunden. Hierdurch kann besonders kostengünstig und einfach eine mechanische Anbindung des Schließkörpers erreicht werden, so dass insbesondere ein kostengünstiges Luftfedersystem resultiert.

Vorteilhafterweise erstreckt die Ventilanordnung sich zumindest teilweise, bevorzugt vollständig, in/durch den Durchbruch. Hierdurch kann eine besonders kompakte Ventilanordnung erreicht werden, so dass Bauraum gespart werden kann.

Bevorzugt weist die Ventilanordnung ein Federelement auf, wobei die Ventilanordnung vorteilhafterweise derart gestaltet ist, dass diese in einem unbelasteten Zustand des Federelements einen Luftstrom durch den Durchbruch ermöglicht. Durch das Vorsehen eines Federelements kann besonders einfach eine Vorspannung der Ventilanordnung erreicht werden, so dass dessen unbelasteter Schaltzustand durch das Federelement klar definiert ist. Vorteilhafterweise ist das Federelement derart ausgestaltet, dass das Federelement, in dem Zustand in dem ein Luftstrom durch den Durchbruch möglich ist, eine geringere mechanische Energie aufweist, als wenn ein Luftstrom durch den Durchbruch verhindert ist. In anderen Worten ist das Federelement daher derart ausgestaltet, dass dieses versucht, die Ventilanordnung in diejenige Schaltstellung zu bringen, in welchem ein Luftstrom durch den Durchbruch möglich ist.

Vorteilhafterweise ist der Schließkörper an seiner dem Durchbruch abgewandten Seite zumindest teilweise, bevorzugt vollständig, konkav ausgebildet. Hierdurch kann eine Beschädigung von Luftfederkomponenten, insbesondere des Luftfederbalgs und/oder des Luftfederkolbens, verhindert bzw. reduziert werden. Vorteilhafterweise ist die dem Durchbruch abgewandte Seite des Schließkörpers pilzartig ausgestaltet. Besonders bevorzugt ist die Seite des Schließkörpers, welche dem Durchbruch zugewandt ist, im Wesentlichen planar ausgestaltet. Im Wesentlichen planar ist eine Fläche insbesondere dann, wenn die Fläche sich zwischen zwei absolut parallelen Ebenen oder absolut koaxialen Zylindern erstreckt und die beiden idealparallelen Ebenen einen maximalen Abstand von 1 mm oder die beiden absolut koaxialen Zylinder einen Durchmesserunterschied von maximal 1mm zu einander haben. Durch dieses im Westentlichen planare Ausgestalten des Teils des Schließkörpers, welcher dem Durchbruch zugewandt ist, kann ein besonders hohes Maß an Dichtwirkung erreicht wird.

Bevorzugt weist die Abrollfläche oder der Kontaktabschnitt eine Vielzahl von Durchbrüchen auf, wobei bevorzugt jedem Durchbruch eine Ventilanordnung zugeordnet ist. Durch das Vorsehen von einer Vielzahl von Durchbrüchen, insbesondere mindestens zwei, vier oder sechs, kann sichergestellt werden, dass ein besonders geringer Strömungswiderstand für den gesamten Luftstrom zwischen dem inneren Luftvolumen und der Umgebung resultiert.

Bevorzugt erstreckt sich der Luftfederkolben entlang einer Längsrichtung, wobei an einem ersten distalen Ende des Luftfederkolbens in Längsrichtung der Luftfederbalg angeordnet ist, wobei zumindest ein Durchbruch einen Abstand in Längsrichtung zum ersten distalen Ende des Luftfederkolbens aufweist, wobei das Verhältnis des Abstands zur maximalen Erstreckung des Luftfederkolbens in Längsrichtung in einem Bereich von 0,05 bis 0,5, bevorzugt in einem Bereich von 0,1 bis 0,35 und besonders in einem Bereich von 0,2 bis 0,3 liegt. Die Längsrichtung des Luftfederkolbens kann insbesondere diejenige Richtung sein, in welche sich der Luftfederkolben erstreckt. Vorteilhafterweise ist die Längsrichtung des Luftfederkolbens bei einer rotationssymmetrischen Ausgestaltung des Mantelbereichs des Luftfederkolbens und/oder der Abrollfläche des Luftfederkolbens parallel zu dieser Rotationssymmetrieachse ausgerichtet. Alternativ oder zusätzlich bevorzugt ist die Längsrichtung des Luftfederkolbens insbesondere diejenige Richtung, in welche sich der Luftfederkolben für eine Ein- und Ausfederbewegung des Luftfedersystems bewegen muss. Bei einem Verhältnis im Bereich von 0,05 bis 0,5 resultiert ein Luftfedersystem mit einem besonders breiten Einsatzspektrum. Bei einem Verhältnis im Bereich von 0,1 bis 0,35 resultiert ein Luftfedersystem, welches ein besonders hohes Maß an Sicherheit gegenüber einem Überdruck im inneren Luftvolumen aufweist. Bei einem Verhältnis im Bereich von 0,2 bis 0,3 resultiert ein besonders leicht herzustellendes Luftfedersystem.

Vorteilhafterweise ist der Schließkörper derart angeordnet, dass dessen eines Ende, insbesondere dasjenige, welches einem Verbindungsbereich zwischen Luftfederbalg und Luftfederkolben zugewandt ist, als ein freies/bewegliches Ende ausgebildet ist. Hierdurch kann in einfacher und effektiver Weise ein schnelles Schließen der Ventilanordnung und somit ein Verhindern des Luftstroms durch den Durchbruch erreicht werden. Vorteilhafterweise ist das dem Verbindungsbereich - zwischen Luftfederbalg und Luftfederkolben - abgewandte Ende als ein Filmgelenk ausgebildet um insbesondere am Luftfederkolben festgelegt zu sein.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde.

Es zeigen:
- Figur 1: eine Schnittansicht eines Luftfedersystems;
- Figur 2: eine Detailansicht eines Luftfedersystems;
- Figur 3: eine weitere Detailansicht eines Schnitts durch ein Luftfedersystem;
- Figur 4: eine Detailansicht eines erfindungsgemäßen Luftfedersystems mit einer Ventilanordnung;
- Figur 5: eine alternative Ausgestaltung eines erfindungsgemäßen Luftfeder systems mit einer Ventilanordnung und
- Figur 6: eine weitere alternative Ausgestaltung eines erfindungsgemäßen Luftfedersystems mit einer Ventilanordnung.

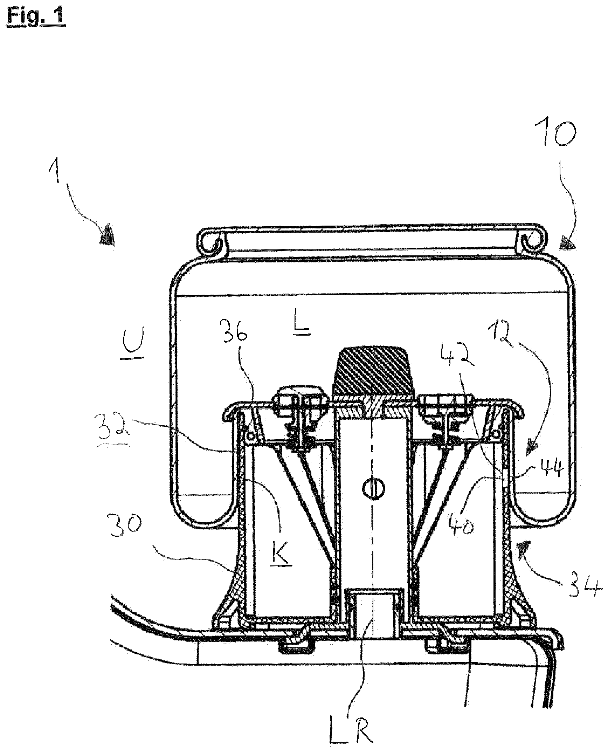

In der **Figur 1** ist ein Luftfedersystem 1 gezeigt. Das Luftfedersystem 1 umfasst ein Luftfederbalg 10 und einen Luftfederkolben 30, welcher als ein Tauchkolben in der in Figur 1 dargestellten Ausführungsform ausgebildet ist. Der Luftfederbalg 10 weist einen Kontaktabschnitt 12 auf, welcher unmittelbar mit der Abrollfläche 32 des Luftfederkolbens 30 kontaktiert. Diese kontaktierenden Bereiche der Abrollfläche 32 und des Kontaktabschnitts 12 definieren dabei die Kontaktfläche K. Der Luftfederbalg 10 ist über die Klemmplatte 36 mechanisch mit dem Tauchkolben 30 verbunden. Der Tauchkolben 30 weist dabei in dessen Mantelbereich 34 die Abrollfläche 32 auf. In der Abrollfläche 32 ist ein Durchbruch 40 angeordnet. Dieser Durchbruch 40 weist dabei ein erstes Ende 42 und ein zweites Ende 44 auf. Das erste Ende 42 des Durchbruchs 40 mündet dabei in das innere Luftvolumen L. dieses innere Luftvolumen L wird sowohl durch das Arbeitsvolumen als auch durch das Volumen innerhalb des Luftfederkolbens 30 gebildet. Diese beiden Volumina sind fluidisch über die in der Klemmplatte 36 angeordneten Ventile miteinander verbunden. Das zweite Ende 44 des Durchbruchs 40 mündet in der Umgebung U. Bei einer Relativbewegung des Luftfederbalgs 10 in Längsrichtung LR des Luftfederkolbens findet eine Veränderung der Kontaktfläche K statt. Durch diese Veränderung der Kontaktfläche K kann ein Luftvolumen durch den Durchbruch 40 fließen. In der in Figur 1 dargestellten Ausführungsform ist jedoch ein Luftstrom durch den Durchbruch 40 verhindert, denn ein Teil des Luftfederbalgs 10 verschließt den Durchbruch 40, sodass durch den Durchbruch 40 keine fluidische Verbindung zwischen dem inneren Luftvolumen L und der Umgebung U möglich ist.

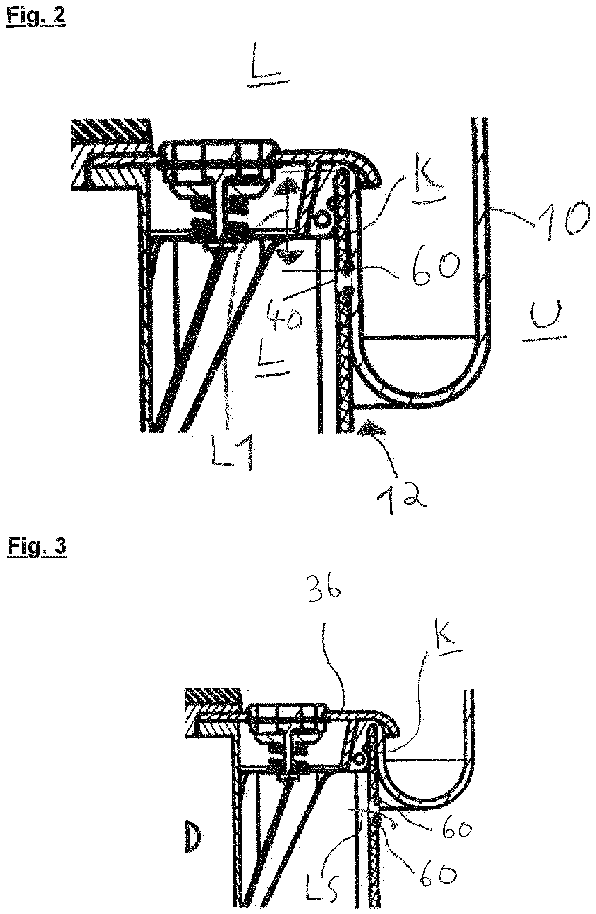

In **Figur 2** ist eine Detailansicht eines Luftfedersystems gezeigt. In der in Figur 2 gezeigten Ausführungsform erstreckt sich ein Dichtelement 60, in Form eines O-Ringes, teilweise in den Durchbruch 40. Bei der in der Figur 2 dargestellten Ausführungsform ist weiterhin ein Luftstrom zwischen dem inneren Luftvolumen L und der Umgebung U durch den Luftfederbalg 10 und dessen Kontaktabschnitt 12 verhindert. Der Durchbruch 40 weist dabei einen Abstand L1 in Längsrichtung vom ersten distalen Ende des Luftfederkolbens 30 auf.

In der **Figur 3** ist eine weitere Detailansicht eines Luftfedersystems gezeigt, wobei die in Figur 3 dargestellte Ausführungsform prinzipiell zu der in der Figur 2 dargestellten Ausführungsform passen kann. Bei der in der Figur 3 dargestellten Ausführungsform ist ein Luftstrom LS durch den Durchbruch 40 ermöglicht, insbesondere dadurch, dass die Kontaktfläche K deutlich kleiner ist als in einem Zustand, in welchem ein Luftstrom LS durch den Durchbruch verhindert ist, wie es beispielsweise bei der in der Figur 2 dargestellten Situation der Fall ist.

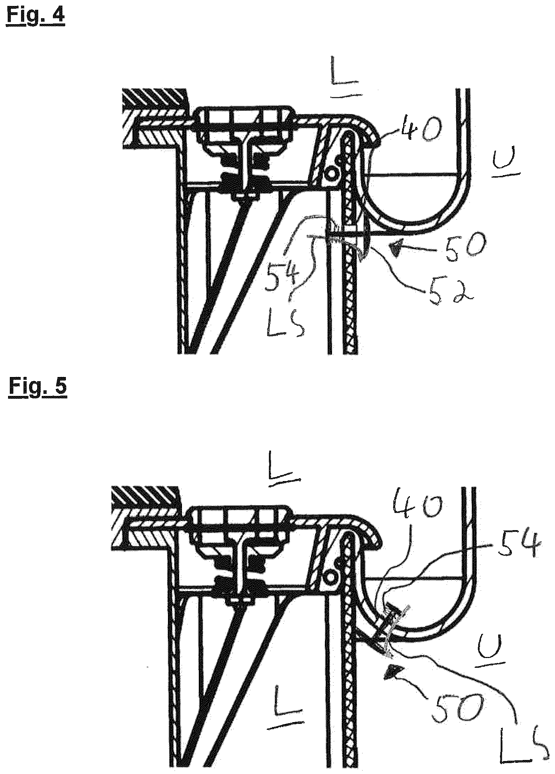

In der **Figur 4** ist eine Detailansicht eines erfindungsgemäßen Luftfedersystems gezeigt. Das Luftfedersystem 1 verfügt dabei über eine Ventilanordnung 50, welche einen Schließkörper 52 und ein Federelement 54 aufweist. Der Schließkörper 52 ist dabei derart ausgebildet, dass dieser an seiner dem Durchbruch 40 abgewandten Seite konkav und pilzförmig ausgestaltet ist. Bei dem in der Figur 4 dargestellten Zustand ist ein Luftstrom LS durch den Durchbruch 40 vom inneren Luftvolumen L in die Umgebung U ermöglicht, insbesondere dadurch, dass die sich vollständig durch den Durchbruch 40 erstreckende Ventilanordnung 50 in einem geöffneten Zustand befindet.

In der **Figur 5** ist eine weitere Detailansicht einer Ausführungsform eines erfindungsgemäßen Luftfedersystems gezeigt. Das in der Figur 5 dargestellte Luftfedersystem unterscheidet sich gegenüber dem in der Figur 4 dargestellten Luftfedersystem insbesondere dadurch, dass die Ventilanordnung 50 und der Durchbruch 40 im Bereich des Kontaktabschnitts 12 des Luftfederbalgs 10 angeordnet sind. Bei dem in der Figur 5 dargestellten Zustand ist ebenfalls ein Luftstrom LS von dem inneren Luftvolumen L in die Umgebung U ermöglicht bzw. möglich.

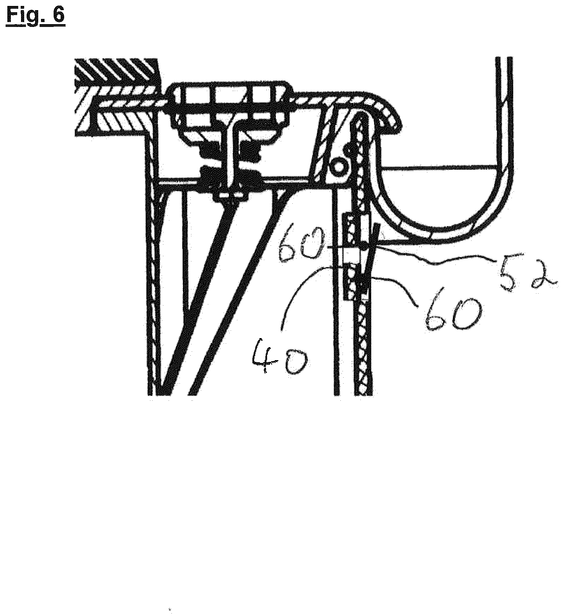

In der **Figur 6** ist eine weitere Detailansicht eines erfindungsgemäßen Luftfedersystems gezeigt. Bei der in der Figur 6 dargestellten Ventilanordnung ist der Schließkörper 52 plattenförmig ausgebildet und über ein Filmgelenk mit dem Luftfederkolben verbunden. Bei der in der Figur 6 dargestellten Ausführungsform ist die Ventilanordnung 50 derart ausgestaltet, dass der Schließkörper 52 in einer geschlossenen Stellung nicht über den äußeren Mantelbereich des Luftfederkolbens hinausragt.

### Bezugszeichenliste:

- 1: - Luftfedersystem
- 10: - Luftfederbalg
- 12: - Kontaktabschnitt
- 30: - Luftfederkolben
- 32: - Abrollfläche
- 34: - Mantelbereich
- 36: - Klemmplatte
- 40: - Durchbruch
- 42: - erste Ende des Durchbruchs (40)
- 44: - zweites Ende des Durchbruchs (40)
- 50: - Ventilanordnung
- 52: - Schließkörper
- 54: - Federelement
- 60: - Dichtelement
- K: - Kontaktfläche
- L: - inneres Luftvolumen
- LR: - Längsrichtung des Luftfederkolbens (30)
- L1: - Abstand in Längsrichtung des Durchbruchs (40) vom ersten Ende distalen Ende des Luftfederkolbens (30)
- LS: - Luftstrom
- U: - Umgebung

## Patentansprüche

1. Luftfedersystem (1), insbesondere für Nutzfahrzeuge, umfassend
einen Luftfederbalg (10) und einen Luftfederkolben (30),
wobei der Luftfederbalg (10) mittelbar und/oder unmittelbar mit einem ersten Fahrwerksteil, insbesondere einem Fahrzeugrahmen, verbunden ist oder dazu ausgelegt ist, verbunden zu sein,
wobei der Luftfederkolben (30) mittelbar und/oder unmittelbar mit einem zweiten Fahrwerksteil, insbesondere einem Lenker, verbunden ist oder dazu ausgelegt ist, verbunden zu sein,
wobei der Luftfederbalg (10) und der Luftfederkolben (30) mittelbar und/oder unmittelbar miteinander verbunden sind oder dazu ausgelegt sind, verbunden zu sein,
wobei der Luftfederbalg (10) und der Luftfederkolben (30) zumindest teilweise ein inneres Luftvolumen (L) umschließen,
wobei der Luftfederkolben (30) eine Abrollfläche (32) für das Abrollen des Luftfederbalgs (10) aufweist,
wobei der Luftfederbalg (10) einen Kontaktabschnitt (12) für das Abrollen auf der Abrollfläche (32) aufweist,
wobei die Abrollfläche (32) und/oder der Kontaktabschnitt (12) zumindest einen Durchbruch (40) aufweisen,
wobei kontaktierende Bereiche der Abrollfläche (32) und des Kontaktabschnitts (12) eine Kontaktfläche (K) definieren,
wobei durch eine Veränderung der Kontaktfläche (K), insbesondere durch eine Relativbewegung des Luftfederbalgs (10) zum Luftfederkolben (30), eine fluidische Verbindung für einen Luftstrom (LS) durch den zumindest einen Durchbruch (40) zwischen dem inneren Luftvolumen (L) und einer Umgebung (U) ermöglicht oder verhindert ist,
wobei der Durchbruch (40) ein erste Ende (42) und ein zweites Ende (44) aufweist,
wobei das erste Ende (42) des Durchbruchs (40) in dem inneren Luftvolumen (L) mündet, und
wobei das zweite Ende (44) des Durchbruchs (40) in der Abrollfläche (32) oder in dem Kontaktabschnitt (12) angeordnet ist und/oder mündet,
**dadurch gekennzeichnet, dass** das Luftfedersystem (1) eine Ventilanordnung (50) umfasst,
wobei die Ventilanordnung (50) einen Luftstrom (LS) durch den Durchbruch (40) vom inneren Luftvolumen (L) in die Umgebung (U) ermöglicht oder verhindert.

2. Luftfedersystem gemäß Anspruch 1,
wobei in und/oder um den Durchbruch (40) ein Dichtelement (60), insbesondere ein O-Ring, angeordnet ist.

3. Luftfedersystem (1) gemäß einem der vorhergehenden Ansprüche,
wobei eine Fluidstrecke zwischen dem ersten Ende (42) und der Umgebung (U) maximal 2 cm, bevorzugt maximal 1,5 cm und besonders bevorzugt maximal 0,9 cm beträgt.

4. Luftfedersystem (1) gemäß einem der vorhergehenden Ansprüche,
wobei die Länge des Durchbruchs zu der Querschnittsfläche des Durchbruchs (40) in einem Verhältnis im Bereich von 0,1 bis 0,6, bevorzugt in einem Bereich von 0,2 bis 0,5 und besonders bevorzugt in einem Bereich von 0,27 bis 0,4, liegt.

5. Luftfedersystem gemäß einem der vorhergehenden Ansprüche,
wobei sich der Durchbruch (40) geradlinig erstreckt.

6. Luftfedersystem (1) gemäß einem der vorhergehenden Ansprüche,
wobei die Ventilanordnung (50) einen Schließkörper (52) umfasst,
wobei der Schließkörper (52) durch eine translatorische oder durch eine rotatorische Bewegung, insbesondere relativ zur Abrollfläche (32) oder zum Kontaktabschnitt (12), einen Luftstrom (LS) durch den Durchbruch (40) vom inneren Luftvolumen (L) in die Umgebung (U) ermöglicht oder verhindert.

7. Luftfedersystem (1) gemäß Anspruch 6,
wobei der Schließkörper (52), wenn ein Luftstrom (LS) durch den Durchbruch (40) vom inneren Luftvolumen (L) in die Umgebung (U) verhindert ist, zumindest teilweise zwischen der Abrollfläche (32) und dem Kontaktabschnitt (12) angeordnet ist.

8. Luftfedersystem (1) gemäß Anspruch 6 oder 7,
wobei der Schließkörper (52) aus Kunststoff gebildet ist.

9. Luftfedersystem (1) gemäß einem der Ansprüche 6, 7 und/oder 8,
wobei der Schließkörper (52) ein Filmgelenk aufweist und/oder über ein Filmgelenk mit dem Tauchkolben (30), insbesondere mit der Abrollfläche (32), verbunden ist.

10. Luftfedersystem (1) gemäß einem der vorhergehenden Ansprüche,
wobei die Ventilanordnung (50) sich zumindest teilweise, bevorzugt vollständig, in/durch den Durchbruch (40) erstreckt.

11. Luftfedersystem (1) gemäß einem der vorhergehenden Ansprüche,
wobei die Ventilanordnung (50) ein Federelement (54) aufweist,
wobei die Ventilanordnung (50) vorteilhafterweise derart gestaltet ist, dass diese in einem unbelastet Zustand des Federelements (54) einen Luftstrom (LS) durch den Durchbruch (40) ermöglicht.

12. Luftfedersystem (1) gemäß einem der vorhergehenden Ansprüche,
wobei der Schließkörper (52) an seiner dem Durchbruch (40) abgewandten Seite konkav ausgebildet ist.

13. Luftfedersystem (1) gemäß einem der vorhergehenden Ansprüche,
wobei die Abrollfläche (32) oder der Kontaktabschnitt (12) eine Vielzahl von Durchbrüchen (40) aufweist,
wobei bevorzugt jedem Durchbruch (40) eine Ventilanordnung (50) zugeordnet ist.

## Claims

1. An air suspension system (1), in particular for commercial vehicles, comprising
an air suspension bellows (10) and an air suspension piston (30),
wherein the air suspension bellows (10) is indirectly and/or directly connected or designed to be connected to a first chassis part, in particular a vehicle frame,
wherein the air suspension piston (30) is indirectly and/or directly connected or designed to be connected to a second chassis part, in particular a link,
wherein the air suspension bellows (10) and the air suspension piston (30) are indirectly and/or directly connected to each other or are designed to be connected,
wherein the air suspension bellows (10) and the air suspension piston (30) at least partially enclose an inner air volume (L),
wherein the air suspension piston (30) has a rolling surface (32) for the rolling of the air suspension bellows (10)
wherein the air suspension bellows (10) has a contact portion (12) for rolling on the rolling surface (32)
wherein the rolling surface (32) and/or the contact portion (12) have at least one opening (40),
wherein contacting areas of the rolling surface (32) and the contact portion (12) define a contact surface (K),
wherein a fluidic connection for an air flow (LS) through the at least one opening (40) between the inner air volume (L) and an environment (U) is enabled or prevented by a change in the contact surface (K), in particular by a relative movement of the air suspension bellows (10) to the air suspension piston (30),
wherein the opening (40) has a first end (42) and a second end (44),
the first end (42) of the opening (40) opening into the inner air volume (L), and
the second end (44) of the opening (40) being arranged and/or opening in/into the rolling surface (32) or in/into the contact portion (12),
**characterized in that** the air suspension system (1) comprises a valve arrangement (50),
wherein the valve arrangement (50) enables or prevents an air flow (LS) through the opening (40) from the inner air volume (L) to the environment (U).

2. The air suspension system (1) according to claim 1,
wherein a sealing element (60), in particular an O-ring, is arranged in and/or around the opening (40)

3. The air suspension system (1) according to any one of the preceding claims,
wherein a fluid distance between the first end (42) and the environment (U) is a maximum of 2 cm, preferably a maximum of 1.5 cm and more preferably a maximum of 0.9 cm.

4. The air suspension system (1) according to any one of the preceding claims,
wherein the length of the opening to the cross-sectional area of the opening (40) is in a ratio in the range of 0.1 to 0.6, preferably in the range of 0.2 to 0.5 and more preferably in the range of 0.27 to 0.4.

5. The air suspension system according to any one of the preceding claims,
wherein the opening (40) extends in a straight line.

6. The air suspension system (1) according to any one of the preceding claims,
wherein the valve arrangement (50) comprises a closing body (52),
wherein the closing body (52) enables or prevents an air flow (LS) through the opening (40) from the inner air volume (L) into the environment (U) by a translatory or by a rotational movement, in particular relative to the rolling surface (32) or to the contact portion (12).

7. The air suspension system (1) according to claim 6,
wherein the closing body (52), when an air flow (LS) through the opening (40) from the inner air volume (L) into the environment (U) is prevented, is arranged at least partially between the rolling surface (32) and the contact portion (12).

8. The air suspension system (1) according to claim 6 or 7,
wherein the closing body (52) is formed from plastic.

9. The air suspension system (1) according to one of the claims 6, 7 and/or 8,
wherein the closing body (52) has a film joint and/or is connected via a film joint to the plunger (30), in particular to the rolling surface (32)

10. The air suspension system (1) according to any one of the preceding claims,
wherein the valve arrangement (50) extends at least partially, preferably completely, into/through the opening (40).

11. The air suspension system (1) according to any one of the preceding claims,
wherein the valve arrangement (50) comprises a spring element (54),
wherein the valve arrangement (50) is advantageously designed in such a way that it allows an air flow (LS) through the opening (40) in an unloaded state of the spring element (54).

12. The air suspension system (1) according to any one of the preceding claims,
wherein the closing body (52) is concave on its side facing away from the opening (40).

13. The air suspension system (1) according to any one of the preceding claims,
wherein the rolling surface (32) or the contact portion (12) has a plurality of openings (40),
wherein preferably a valve arrangement (50) is assigned to each opening (40).

## Revendications

1. Système de ressort pneumatique (1), en particulier pour véhicules utilitaires, comprenant
un soufflet de ressort pneumatique (10) et un piston de ressort pneumatique (30),
dans lequel
le soufflet de ressort pneumatique (10) est relié ou conçu pour être relié indirectement et/ou directement à une première partie du train de roulement, en particulier à un châssis de véhicule,
le piston de ressort pneumatique (30) est relié ou conçu pour être relié indirectement et/ou directement à une seconde partie du train de roulement, en particulier à un bras oscillant,
le soufflet de ressort pneumatique (10) et le piston de ressort pneumatique (30) sont reliés l'un à l'autre ou sont conçus pour être reliés l'un à l'autre indirectement et/ou directement,
le soufflet de ressort pneumatique (10) et le piston de ressort pneumatique (30) enferment au moins partiellement un volume d'air intérieur (L),
le piston de ressort pneumatique (30) présente une surface de roulement (32) pour faire rouler le soufflet de ressort pneumatique (10),
le soufflet de ressort pneumatique (10) présente une portion de contact (12) pour rouler sur la surface de roulement (32),
la surface de roulement (32) et/ou la portion de contact (12) présente(nt) au moins une percée (40),
des zones en contact de la surface de roulement (32) et de la portion de contact (12) définissent une surface de contact (K),
une communication fluidique pour un écoulement d'air (LS) à travers ladite au moins une percée (40) entre le volume d'air intérieur (L) et un environnement (U) est permise ou empêchée par une modification de la surface de contact (K), en particulier par un mouvement relatif du soufflet de ressort pneumatique (10) par rapport au piston de ressort pneumatique (30),
la percée (40) présente une première extrémité (42) et une seconde extrémité (44),
la première extrémité (42) de la percée (40) débouche dans le volume d'air intérieur (L), et
la seconde extrémité (44) de la percée (40) est disposée et/ou débouche dans la surface de roulement (32) ou dans la portion de contact (12),
**caractérisé en ce que**
le système de ressort pneumatique (1) comprend un ensemble de valve (50),
l'ensemble de valve (50) permettant ou empêchant un écoulement d'air (LS) à travers la percée (40) depuis le volume d'air intérieur (L) vers l'environnement (U).

2. Système de ressort pneumatique selon la revendication 1,
dans lequel un élément d'étanchéité (60), en particulier un joint torique, est disposé dans et/ou autour de la percée (40).

3. Système de ressort pneumatique (1) selon l'une des revendications précédentes, dans lequel un trajet du fluide entre la première extrémité (42) et l'environnement (U) est de 2 cm au maximum, de préférence de 1,5 cm au maximum et de manière particulièrement préférée de 0,9 cm au maximum.

4. Système de ressort pneumatique (1) selon l'une des revendications précédentes,
dans lequel la longueur de la percée par rapport à la surface de la section transversale de la percée (40) est dans un rapport dans la plage de 0,1 à 0,6, de préférence dans une plage de 0,2 à 0,5, et de manière particulièrement préférée dans une plage de 0,27 à 0,4.

5. Système de ressort pneumatique selon l'une des revendications précédentes,
dans lequel la percée (40) s'étend en ligne droite.

6. Système de ressort pneumatique (1) selon l'une des revendications précédentes,
dans lequel l'ensemble de valve (50) comprend un corps de fermeture (52), le corps de fermeture (52) permettant ou empêchant un écoulement d'air (LS) à travers la percée (40) depuis le volume d'air intérieur (L) vers l'environnement (U) par un mouvement de translation ou de rotation, en particulier par rapport à la surface de roulement (32) ou à la portion de contact (12).

7. Système de ressort pneumatique (1) selon la revendication 6,
dans lequel, lorsqu'un écoulement d'air (LS) à travers la percée (40) depuis le volume d'air intérieur (L) vers l'environnement (U) est empêché, le corps de fermeture (52) est au moins partiellement disposé entre la surface de roulement (32) et la portion de contact (12).

8. Système de ressort pneumatique (1) selon la revendication 6 ou 7,
dans lequel le corps de fermeture (52) est réalisé en matière plastique.

9. Système de ressort pneumatique (1) selon l'une des revendications 6, 7 et/ou 8,
dans lequel le corps de fermeture (52) comprend une articulation en film et/ou est relié au piston plongeur (30), en particulier à la surface de roulement (32), par l'intermédiaire d'une articulation en film.

10. Système de ressort pneumatique (1) selon l'une des revendications précédentes,
dans lequel l'ensemble de valve (50) s'étend au moins partiellement, de préférence complètement, dans/à travers la percée (40).

11. Système de ressort pneumatique (1) selon l'une des revendications précédentes,
dans lequel l'ensemble de valve (50) comprend un élément élastique (54), l'ensemble de valve (50) étant avantageusement configuré de manière à permettre un écoulement d'air (LS) à travers la percée (40) dans un état non chargé de l'élément élastique (54).

12. Système de ressort pneumatique (1) selon l'une des revendications précédentes,
dans lequel le corps de fermeture (52) est réalisé concave sur son côté détourné de la percée (40).

13. Système de ressort pneumatique (1) selon l'une des revendications précédentes,
dans lequel la surface de roulement (32) ou la portion de contact (12) comprend une pluralité de percées (40),
de préférence, un ensemble de valve (50) est associé à chaque percée (40).
